# EUROPEAN PATENT APPLICATION

(11) **EP 1 048 440 A2**
(43) Date of publication of application: **02.11.2000**
(21) Application number: 00106125.8
(22) Date of filing: 21.03.2000
(51) Int. Cl.: B29C 67/00, C08G 18/80, C08G 18/10, C08G 18/68, C08L 67/06

(54) **Composite molding compound additive**

(30) Priority: 26.04.1999 US 299351
(71) Applicant: THE BUDD COMPANY, Troy, MI 48084 (US)
(72) Inventor: Guha, Probir K., Troy, Michigan 48090 (US); Yen, Robert C., Farmington Hills, Michigan 48331 (US)
(74) Representative: Schaumburg, Thoenes & Thurn

(57) **Abstract**

The present invention provides a blocked polyisocyanate low profile additive comprising an isocyanate terminated urethane prepolymer having an NCO to isocyanate reactive group equivalent ratio of greater than about 1.6/1, a blocking agent with one or more isocyanate reactive groups, and an ethylenically unsaturated monomer.

## Description

### BACKGROUND OF THE INVENTION

### 1. Field of the Invention

The present invention relates generally to low profile additives in composite molding compounds and methods of forming the compounds and, more particularly, to the use of a blocked polyisocyanate low profile additive in composite molding compounds.

### 2. Discussion of the Related Art

Reinforced thermosetting polyester-based molding compositions used in, for example, sheet molding compound (SMC) have been known for many years. Typically, the compound is made by first mixing together a polyester resin and various fillers and additives, producing an A side. Then, a thickening agent, such as magnesium oxide or hydroxide, is added as a B side to the composition. Finally, a reinforcing material, such as glass fiber, is added to the molding composition.

In many instances, thermoplastic materials are also added to the molding composition in the A side to control shrinkage of the part being molded during cure and help provide smooth surfaces of the part. These thermoplastic materials are known in the art as low profile or low shrink additives. Examples of thermoplastics that provide varying levels of shrinkage control are polyvinyl acetate, polymethylmethacrylate, saturated polyester, and polyurethane.

U.S. Pat. No. 4,535,110, assigned to The Budd Company, incorporated herein by reference, discloses the use of an isocyanate terminated urethane prepolymer as a low profile additive in sheet molding compound. This low profile additive functions effectively as a dual functional additive, assisting with both the thickening process and shrinkage control action. Due to the free isocyanate content of the low profile additive, however, the additive cannot be added to the A side of sheet molding compound, as the isocyanate groups would prematurely react with the hydroxyl groups of the polyester resin and act as thickening agents. Thus, the urethane prepolymer cannot be employed in a two component or A side/B side system. The prepolymer is instead added as a third component or C side to the molding composition in order to avoid premature thickening of the composition. The use of this prepolymer in an A side/B side/C side system does require additional equipment to add the C side components during manufacture of the sheet molding compound. In other sheet molding compound manufacturing techniques using only the A side/B side process, the superior qualities of this prepolymer cannot be readily used since the additional equipment is not in place.

There thus exists a need in the art to provide a low profile additive for use in composite molding compounds that has the effective shrinkage control qualities of an isocyanate terminated urethane prepolymer, but which can be employed in a more economical and cost effective manner. The present invention overcomes this problem by blocking the free isocyanate groups of the isocyanate terminated urethane prepolymer and forming a blocked low profile additive for shrinkage control in composite molding compounds. Because the blocked low profile additive may no longer assist in the thickening of the molding composition, the additive may be added to the A side or B side, thereby eliminating the need for the C side equipment in the sheet molding compound manufacturing process.

### SUMMARY OF THE INVENTION

The present invention provides a blocked polyisocyanate low profile additive comprising an isocyanate terminated urethane prepolymer having an isocyanate (NCO) to isocyanate reactive group equivalent ratio of greater than about 1.6/1, a blocking agent with at least one isocyanate reactive group, and an ethylenically unsaturated monomer.

The present invention additionally provides a composite molding compound comprising a thermoset resin, an ethylenically unsaturated monomer, and a blocked polyisocyanate low profile additive comprising an isocyanate terminated urethane prepolymer and a blocking agent with at least one isocyanate reactive group. The isocyanate terminated urethane prepolymer has an NCO to isocyanate reactive group equivalent ratio of greater than about 1.6/1.

The present invention is also directed to a method for producing a composite molding compound. The method includes mixing a blocked polyisocyanate low profile additive with a thermoset resin, producing a mixture. The blocked polyisocyanate low profile additive comprises a blocking agent with at least one isocyanate reactive group and an isocyanate terminated urethane prepolymer having an NCO to isocyanate reactive group equivalent ratio of greater than about 1.6/1. A thickening agent is then added to the mixture. Finally, a fibrous reinforcing material is added to the mixture to produce the composite molding compound.

The present invention is further directed to a method for producing sheet molding compound. The method includes mixing a blocked polyisocyanate low profile additive with a thermoset resin, producing an A side mixture. The blocked polyisocyanate low profile additive comprises a blocking agent with at least one isocyanate reactive group and an isocyanate terminated urethane prepolymer having an NCO to isocyanate reactive group equivalent ratio of greater than about 1.6/1. The method includes adding to the A side mixture an inert filler, ethylenically unsaturated monomer, free radical polymerization catalyst, and phase stabilizing agent. The method also includes adding to the A side mixture an inhibitor, catalyst, and mold release agent. A second mixture, a B side mixture, is then added to the A side mixture, thereby producing an A side/B side mixture, wherein the B side includes a thickening agent. A fibrous reinforcing material is then added to the A side/B side mixture to produce the sheet molding compound.

### DETAILED DESCRIPTION OF THE PREFERRED EMBODIMENT(S)

The following description of the preferred embodiments is mainly exemplary in nature and is not intended to limit the invention or its application or uses.

The present invention provides a blocked polyisocyanate low profile additive and the use of such an additive in a composite molding compound. The composite molding compounds are preferably, but not limited to, polyester or vinyl ester based composites. These composites are used in various systems or applications, such as, sheet molding compound, bulk molding compound, resin transfer molding, pultrusion, hand lay-up, tooling, preform molding, and wet molding.

The blocked polyisocyanate low profile additive of the present invention is made up of an isocyanate terminated urethane prepolymer having an isocyanate (NCO) to isocyanate reactive group equivalent ratio of greater than about 1.6/1. The isocyanate reactive group may be defined in the present invention as a hydroxyl, amine, amide, carboxyl or epoxy group. The isocyanate terminated urethane prepolymer employed in the present invention is known in the art, as disclosed in U.S. Pat. No. 4,535,110 (hereby incorporated by reference) as a low profile additive in sheet molding compound. The free isocyanate (NCO) groups of the urethane prepolymer react with the isocyanate reactive groups of the blocking agent, such that the NCO groups are not permitted or are blocked from reacting with the thermoset resin of the composite molding compound.

The NCO to isocyanate reactive group equivalent ratio is preferably between about greater than 1.6 to about 5, and most preferably about 1.8 to about 2.2. The blocked polyisocyanate low profile additive also preferably contains an NCO of the prepolymer to isocyanate reactive group of the blocking agent equivalent ratio of about 1/1 to about 1/3.

The blocking agent employed in the present invention is preferably, but not limited to, hydroxyls, carboxyls, epoxides, amines, amides, and mixtures thereof. The blocking agent is most preferably an amine or hydroxyl compound. Examples of the blocking agent include, but are not limited to, an hydroxyethylacrylate, hydroxypropyl acrylate, hydroxyethyl acrylate, allyl alcohol, t-butylaminoethyl methacrylate, and N-(isobutoxymethyl)acrylamide.

Additional preferred examples of blocking agents may be a dicarboxylic anhydride, such as maleic anhydride, succinic anhydride, glutaric anhydride, citraconic anhydride, 2,3-dimethyl maleic anhydride, camphoric anhydride, cis-1,2-cyclohexane dicarboxylic anhydride, phthalic anhydride other than homophthalic anhydride, homophthalic anhydride, and trimellitic anhydride.

The blocking agent may further be butanol, propanol, ethylene glycol, diethylene glycol, propylene glycol, propylene glycol isomers, dipropylene glycol, neopentyl glycol, butane diol, butane diol isomers, pentane diol, 3-methylpentane-1,5-diol, hexane diol, hexane diol isomers, octane diol isomers, oxyalkylated hydroquinone, resorcinol and bisphenol A, hydrogenated bisphenol A, 1,4-cyclohexane dimethanol, isomers of cyclohexane dimethanol, polyalkylene oxide diols with molecular weights between 100-500, diethyltoluene diamine, ethylene diamine, 4,4'-methylene bis(2-chloroaniline)("MOCA"), hydrazine, substituted aromatic diamines, N,N-bis(2-hydroxypropyl)-aniline, and epoxides based an novolac, diglycidyl ether, and bisphenol A, epoxidized fatty acids, and epoxidized linseed oil.

In a preferred embodiment, the isocyanate terminated urethane prepolymer and blocking agent are further mixed with a monomer containing ethylenic unsaturation, and then used like any other low shrink additive. The ethylenically unsaturated monomer may be, but is not limited to, styrene, vinyl acetate, vinyl toluene, divinyl benzene, diallyl phthalate, and any other ethylenically unsaturated monomer commonly used in the art.

The composite molding compound contemplated for use with the present invention is comprised of a thermoset resin, ethylenically unsaturated monomer, and a blocked polyisocyanate law profile additive comprising an isocyanate terminated urethane prepolymer and a blocking agent with one or more isocyanate reactive groups, wherein the isocyanate terminated prepolymer has an NCO to isocyanate reactive group equivalent ratio of greater than about 1.6/1. The molding compound may also include the following: a Group IIA metallic oxide or hydroxide, inhibitor, catalyst, mold release agent, fibrous reinforcing material, inert filler, free radical polymerization catalyst, additional thermoplastic low profile additive, and phase stabilizing agent.

The metallic oxide or hydroxide used in the present invention composite moldings compounds is essentially a metal oxide or hydroxide from the Group IIA on the periodic table and comprises calcium or magnesium.

A free radical polymerization catalyst may also be employed in the present invention. The catalyst is preferably present in an amount of 1.0 part per 100 parts of total resin and monomer, the parts being measured by weight. The free radical polymerization catalyst is added to the uncured composition so that upon heating to the activation temperature, the additive type cross-linking polymerization reaction will commence between the polymerizable monomer and the unsaturated thermoset resin to form a matrix. The catalyst is usually employed in an amount in the range of about 0.1 to 3.0 parts per 100 parts of the total monomer and resin and is usually a peroxide.

The mold release agent contemplated in the present invention may be any of those used in the prior art, such as zinc stearate, calcium stearate, magnesium stearate, organic phosphate esters and other organic liquid internal mold release agents.

The reinforcing fibers are usually present in an amount of about 10 to 70 weight percent for sheet molding compositions and is preferably glass fibers. The preferred range for this reinforcing fiber is approximately 15 to 70 weight percent for use in thermoset polyester resin applications, such as sheet molding compound.

The isocyanate terminated urethane prepolymer additive of the present invention may or may not be used with any of the conventional low shrink additives of the prior art, such as polyvinyl acetate and polymethyl methacrylate or a mixture thereof, or any other linear oligomer having a molecular weight within the range of approximately 10,000 to approximately 200,000, and preferably approximately 50,000 to approximately to 100,000.

Any number of nonreinforcing fillers, such as clay, carbon fiber, and calcium carbonate, may be added to the composition to reduce overall material costs without sacrificing a significant degree of the desirable physical properties in the final product, or may be added to impart specific properties to the uncured compound. The fillers may be used in an amount ranging from about 20 parts to 1,000 parts by weight per 100 parts of the pure resin in thermoset resin applications, such as a sheet molding compound. The present invention composite molding compounds may also contain additional additives or fillers commonly known in the art.

In general, the composite molding compounds of the present invention are prepared by mixing, blending, or otherwise contacting at least two submixtures or parts together according to procedures known in the art. The first submixture or part (A side) generally contains the thermoset and thermoplastic resins, inhibitor, catalyst, and mold release agent. The A side submixture may additionally include phase-stabilizing additives or agents, an inert filler, and an ethylenically unsaturated monomer with a free radical polymerization catalyst. The blocked polyisocyanate low profile additive of the present invention is then typically added to the A side submixture in manufacturing sheet molding compound, although the additive may be added to the B side mixture explained below. Because the polyisocyanate low profile additive has blocked isocyanate groups, it will not be able to react with the thermoset resin in the A side mixture, causing the compound to thicken prematurely. The need for a C side mixture and equipment for the addition of the urethane low profile additive to the composite molding compound mixture is thus eliminated.

A second submixture or part (B side) of the composite molding compounds generally contains the Group IIA metal oxide (or hydroxide), although this thickening agent may also be directly mixed in the first submixture. Thus the need for a separate B side mixture is eliminated. A fibrous reinforcing material may then be added to the composition.

The present invention compounds and methods may be used to mold various articles or parts including, but not limited to, automotive parts such as fenders, supports, and hoods or doors that may require a Class A finish, i.e., a smooth pit-free finish comparable to sheet metal counterpart panels.

The invention is further described in the following examples. The examples are merely illustrative and do not in any way limit the scope of the invention as described and claimed.

### EXAMPLES

### Example 1 - Blocked Polyisocyanate Low Profile Additive

| Compound A (Parts By Weight) | |
|---|---|
| Prepolymer 1* | 100 |
| Dibutyl amine | 7.5 |
| Styrene | 98.8 |

| | |
|---|---|
| *Prepolymer 1 - The prepolymer is made from the reaction of MDI and polypropylene diol with an NCO/OH ratio = 2:1. The product was then diluted with styrene. The solid content was 75%. | |

### Example 2 - Blocked Polyisocyanate Low Profile Additive

| Compound B (Parts By Weight) | |
|---|---|
| Prepolymer 1 | 100 |
| n-Butanol | 4.3 |
| Styrene | 94 |
| T-12** | 0.04 |

| | |
|---|---|
| **T-12 is a tin catalyst | |

### Example 3 - SMC Employing Blocked Polyisocyanate Low Profile Additive

| Material | Compound C (Parts By Weight) | Compound D (Parts By Weight) |
|---|---|---|
| CX-2151*** | 70 | 70 |
| Acrylic solution (40% solid) | 30 | - |
| Compound A | - | 30 |
| t-Butyl Perbenzoate | 1.5 | 1.5 |
| Zinc Stearate | 4 | 4 |
| Calcium Carbonate | 180 | 180 |
| Magnesium Oxide (38%) | 2.2 | 2.6 |
| Paste Shrinkage (cm/cm) | 0.0038 | 0.0030 |
| Initial Viscosity | 37000 | 37000 |

| | | |
|---|---|---|
| ***CX-2151 is an unsaturated polyester from Alpha/Owens-Corning | | |

### Example 4 - SMC Employing Blocked Polyisocyanate Low Profile Additive

| | Compound E (Parts By Weight) | Compound F (Parts By Weight) |
|---|---|---|
| CX-2151 | 65 | 65 |
| Polyvinyl acetate (38% solid) | 35 | - |
| Compound B | - | 35 |
| t-Butyl Perbenzoate | 1 | 1 |
| Zinc Stearate | 3 | 3 |
| Calcium Carbonate | 200 | 200 |
| Magnesium Oxide | 1.3 | 1.3 |
| Paste Shrinkage (cm/cm) | 0.0020 | 0.0015 |
| Initial Viscosity | 28000 | 29000 |

The use of the blocked polyisocyanate low profile additives A and B above provide improved shrinkage control in the composite molding compounds, as indicated. The blocked low profile additive of the present invention exhibits a lower molecular weight and polyol content than the low profile additives known in the prior art, providing improved processing due to lower viscosity systems and improved color uniformity and stability in a multi-component system. The composite molding compounds are typically molded under heat and pressure by compression molding techniques for sheet molding compound, such as those described in the following U.S. patents which are hereby incorporated by reference: 4,488,862; 4,612,149; 4,855,097; 4,551,085 and 5,130,071. Other molding techniques, such as bulk molding compound, resin transfer molding, pultrusion, hand lay-up, tooling, preform molding, and wet molding, however, may also be used.

## Claims

1. A blocked polyisocyanate low profile additive comprising:
(a) an isocyanate terminated urethane prepolymer having an NCO to isocyanate reactive group equivalent ratio of greater than about 1.6/1;
(b) a blocking agent with at least one isocyanate reactive group; and
(c) an ethylenically unsaturated monomer.

2. A low profile additive according to claim 1 wherein said isocyanate terminated urethane prepolymer has an NCO to isocyanate reactive group equivalent ratio of greater than about 1.6/1 to about 5/1.

3. A low profile additive according to claim 1 wherein said isocyanate terminated urethane prepolymer has an NCO to isocyanate reactive group equivalent ratio of about 1.8/1 to about 2.2/1.

4. A low profile additive according to claim 1 , 2 or 3 wherein said blocked polyisocyanate low profile additive has an NCO of said prepolymer to isocyanate reactive group of said blocking agent equivalent ratio of about 1/1 to about 1/3.

5. A low profile additive according to anyone of the foregoing claims wherein said blocking agent is selected from the group consisting of hydroxyls, carboxyls, epoxides, amines, amides, and mixtures thereof.

6. A low profile additive according to claim 5 wherein said blocking agent is selected from the group consisting of hydroxyethylacrylate, hydroxypropyl acrylate, hydroxyethyl acrylate, allyl alcohol, t-butylaminoethyl methacrylate, N-(isobutoxymethyl)acrylamide, and mixtures thereof.

7. A low profile additive according to claim 5 wherein said blocking agent is a dicarboxylic anhydride selected from the group consisting of maleic anhydride, succinic anhydride, glutaric anhydride, citraconic anhydride, 2,3-dimethyl maleic anhydride, camphoric anhydride, cis-1,2-cyclohexane dicarboxylic anhydride, phthalic anhydride other than homophthalic anhydride, homophthalic anhydride, trimellitic anhydride, and mixtures thereof.

8. A low profile additive according to claim 5 wherein said blocking agent is selected from the group consisting of butanol, propanol, ethylene glycol, diethylene glycol, propylene glycol, propylene glycol isomers, dipropylene glycol, neopentyl glycol, butane dial, butane diol isomers, pentane dial, 3-methylpentane-1,5-diol, hexane diol, hexane diol isomers, octane diol isomers, oxyalkylated hydroquinone, resorcinol and bisphenol A, hydrogenated bisphenol A, 1,4-cyclohexane dimethanol, isomers of cyclohexane dimethanol, polyalkylene oxide diols with molecular weights between 100-500, diethyltoluene diamine, ethylene diamine, 4,4'-methylene bis(2-chloroaniline)("MOCA"), hydrazine, substituted aromatic diamines, N,N-bis(2-hydroxypropyl)-aniline, epoxides based on novolac, diglycidyl ether, and bisphenol A, epoxidized fatty acids, epoxidized linseed oil, and mixtures thereof.

9. A low profile additive according to anyone of the foregoing claims wherein said ethylenically unsaturated monomer is selected from the group consisting of styrene, vinyl acetate, vinyl toluene, divinyl benzene, diallyl phthalate, and mixtures thereof.

10. A composite molding compound comprising:
(a) a thermoset resin;
(b) an ethylenically unsaturated monomer, and
(c) a blocked polyisocyanate low profile additive comprising an isocyanate terminated urethane prepolymer and a blocking agent with at least one isocyanate reactive group, wherein said prepolymer has an NCO to isocyanate reactive group equivalent ratio of greater than about 1.6/1.

11. A molding compound according to claim 10 wherein said blocked polyisocyanate low profile additive comprises an isocyanate terminated urethane prepolymer having an NCO to isocyanate reactive group equivalent ratio of greater than about 1.6/1 to about 5/1.

12. A molding compound according to claim 10 wherein said blocked polyisocyanate low profile additive comprises an isocyanate terminated urethane prepolymer having an NCO to isocyanate reactive group equivalent ratio of about 1.8/1 to about 2.2/1.

13. A molding compound according to claim 10, 11 or 12 further comprising a Group IIA metallic oxide or hydroxide, inhibitor, catalyst, mold release agent, and fibrous reinforcing material.

14. A molding compound according to anyone of claims 10 to 13 further comprising an inert filler, free radical polymerization catalyst, thermoplastic low profile additive, and phase stabilizing agent.

15. A molding compound according to anyone of claims 10 to 14 wherein said blocked polyisocyanate low profile additive has an NCO of said prepolymer to isocyanate reactive group of said blocking agent equivalent ratio of about 1/1 to about 1/3.

16. A molding compound according to anyone of claims 10 to 15 wherein said blocking agent is selected from the group consisting of hydroxyls, carboxyls, epoxides, amines, amides, and mixtures thereof.

17. A molding compound according to claim 16 wherein said blocking agent is selected from the group consisting of hydroxyethylacrylate, hydroxypropyl acrylate, hydroxyethyl acrylate, allyl alcohol, t-butylaminoethyl methacrylate, N-(isobutoxymethyl)acrylamide, and mixtures thereof.

18. A molding compound according to claim 16 wherein said blocking agent is a dicarboxylic anhydride selected from the group consisting of maleic anhydride, succinic anhydride, glutaric anhydride, citraconic anhydride, 2,3-dimethyl maleic anhydride, camphoric anhydride, cis-1,2-cyclohexane dicarboxylic anhydride, phthalic anhydride other than homophthalic anhydride, homophthalic anhydride, trimellitic anhydride, and mixtures thereof.

19. A molding compound according to claim 16 wherein said blocking agent is selected from the group consisting of butanol, propanol, ethylene glycol, diethylene glycol, propylene glycol, propylene glycol isomers, dipropylene glycol, neopentyl glycol, butane diol, butane diol isomers, pentane diol, 3-methylpentane-1,5-diol, hexane diol, hexane diol isomers, octane diol isomers, oxyalkylated hydroquinone, resorcinol and bisphenol A, hydrogenated bisphenol A, 1,4-cyclohexane dimethanol, isomers of cyclohexane dimethanol, polyalkylene oxide diols with molecular weights between 100-500, diethyltoluene diamine, ethylene diamine, 4,4'-methylene bis(2-chloroaniline)("MOCA"), hydrazine, substituted aromatic diamines, N,N-bis(2-hydroxypropyl)-aniline, epoxides based on novolac, diglycidyl ether, and bisphenol A, epoxidized fatty acids, epoxidized linseed oil, and mixtures thereof.

20. A molding compound according to anyone of claims 10 to 19 wherein said ethylenically unsaturated monomer is selected from the group consisting of styrene, vinyl acetate, vinyl toluene, divinyl benzene, diallyl phthalate, and mixtures thereof.

21. A molding compound according to anyone of claims 10 to 20 wherein said molding compound is employed in a system selected from the group consisting of sheet molding compound, bulk molding compound, resin transfer molding, pultrusion, hand lay-up, tooling, preform molding, wet molding, and mixtures thereof.

22. A molding compound according to anyone of claims 10 to 21 wherein said thermoset resin is selected from the group consisting of polyesters, vinyl esters, and mixtures thereof.

23. A method for producing a composite molding compound comprising the steps of:
(a) mixing a blocked polyisocyanate low profile additive with a thermoset resin, producing a mixture, wherein said blocked polyisocyanate low profile additive comprises a blocking agent with at least one isocyanate reactive group and an isocyanate terminated urethane prepolymer having an NCO to isocyanate reactive group equivalent ratio of greater than about 1.6/1;
(b) adding to said mixture a thickening agent; and
(c) further adding to said mixture fibrous reinforcing material to produce said composite molding compound.

24. A method according to claim 23 further comprising the step of adding to step (a) an inert filler, ethylenically unsaturated monomer, free radical polymerization catalyst, and phase stabilizing agent.

25. A method according to claim 24 further comprising the step of adding to step (a) an inhibitor, catalyst, and mold release agent.

26. A method according to claim 25 wherein step (a) forms an A side mixture and step (b) forms a B side mixture.

27. A method according to anyone of claims 23 to 26 wherein said blocked polyisocyanate low profile additive comprises an isocyanate terminated urethane prepolymer having an NCO to isocyanate reactive group equivalent ratio of greater than about 1.6/1 to about 5/1.

28. A method according to anyone of claims 23 to 26 wherein said blocked polyisocyanate low profile additive comprises an isocyanate terminated urethane prepolymer having an NCO to isocyanate reactive group equivalent ratio of about 1.8/1 to about 2.2/1.

29. A method according to anyone of claims 23 to 28 wherein said blocked isocyanate terminated urethane prepolymer comprises a blocking agent selected from the group consisting of hydroxyls, carboxyls, epoxides, amines, amides, and mixtures thereof.

30. A method according to anyone of claims 23 to 29 wherein said molding compound is employed in a system selected from the group consisting of sheet molding compound, bulk molding compound, resin transfer molding, pultrusion, hand lay-up, tooling, preform molding, wet molding, and mixtures thereof.

31. A method for producing sheet molding compound comprising the steps of:
(a) mixing a blocked polyisocyanate low profile additive with a thermoset resin, producing an A side mixture, wherein said blocked polyisocyanate low profile additive comprises a blocking agent with at least one isocyanate reactive group and an isocyanate terminated urethane prepolymer having an NCO to isocyanate reactive group equivalent ratio of greater than about 1.6/1;
(b) adding to said A side mixture an inert filler, ethylenically unsaturated monomer, free radical polymerization catalyst, and phase stabilizing agent;
(c) further adding to said A side mixture an inhibitor, catalyst, and mold release agent;
(d) adding a B side mixture to said A side mixture, thereby producing an A side/B side mixture, wherein said B side comprises a thickening agent; and
(e) adding to said A side/B side mixture a fibrous reinforcing material to produce said sheet molding compound, wherein a C side is not required for the manufacture of said sheet molding compound.
